# EUROPÄISCHE PATENTSCHRIFT

(11) **EP 0 555 287 B1**
(45) Veröffentlichungstag und Bekanntmachung des Hinweises auf die Patenterteilung: **12.10.1994**
(21) Anmeldenummer: 91918748.4
(22) Anmeldetag: 29.10.1991
(51) Int. Cl.: C05F 17/00, C05F 17/02

(54) **VERFAHREN UND VORRICHTUNG ZUR BIOTECHNOLOGISCHEN BEHANDLUNG EINES RESTSTOFFGEMENGES**
PROCESS AND DEVICE FOR BIOTECHNOLOGICALLY PROCESSING MIXTURES OF RESIDUAL SUBSTANCES
PROCEDE ET DISPOSITIF DE TRAITEMENT BIOTECHNOLOGIQUE DE MELANGES DE SUBSTANCES RESIDUELLES

(30) Priorität: 29.10.1990 DE 4034400
(43) Veröffentlichungstag der Anmeldung: 18.08.1993
(73) Patentinhaber: Grabbe, Klaus, Dr., D-38116 Braunschweig (DE)
(72) Erfinder: Grabbe, Klaus, Dr., D-38116 Braunschweig (DE)
(74) Vertreter: von Samson-Himmelstjerna, Friedrich R., Dipl.-Phys.
(86) Internationale Anmeldenummer: EP9102044
(87) Internationale Veröffentlichungsnummer: WO9207807

(56) Entgegenhaltungen:
- EP-A- 0 354 606
- WO-A-90/00162
- WO-A-91/01955
- DE-A- 3 607 920

## Beschreibung

### Technisches Gebiet

Die Erfindung bezieht sich auf ein Verfahren und eine Vorrichtung zur biotechnologischen Behandlung von festen Reststoffgemengen.

### Stand der Technik

Die Aufbereitung biogener Reststoffe und die Beseitigung von Xenobiotica aus allen Bereichen menschlicher Tätigkeit erfordert aus Gründen des Umweltschutzes einen hohen technischen Aufwand, um drei Verfahrensziele zu erreichen, nämlich einen zufriedenstellenden hygienischen Status, eine vollständige Beseitigung von Stinkstoffen und eine Stoffumwandlung, die zur Bildung von Dauerhumus als Teil des natürlichen Stoffkreislaufes und zur Festlegung von Schadstoffen führt.

Die am Markt angebotenen Aufbereitungssysteme weisen oft einen hohen technischen Entwicklungsstand auf, arbeiten jedoch meistens biologisch suboptimal und damit häufig sehr unwirtschaftlich. Dies hängt mit der ungenügenden Beachtung biologischer Stoffumsatzprinzipien zusammen, die aufgrund ihrer unterschiedlichen Rahmenbedingungen eine variable Prozeßführung erfordern. Häufige Fehler sind unausgewogene Rezepturen, mangelhafte Durchmischung und Zerkleinerung heterogenen Materials, zu hohe Temperaturen und zu lange Verweilzeiten.

Grundsätzlich kann die Aufbereitung biogener Reststoffe in offener Mietenrotte betrieben werden, was sich für Ausgangsmaterialien anbietet, die überwiegend aus lignozellulosehaltigen pflanzlichen Reststoffen, z.B. Gehölzschnitt, Baumrinde, bestehen. Tierische und pflanzliche Reststoffe mit hohen Eiweißanteilen hingegen neigen als Folge des mikrobiellen Stoffumsatzes zur Emission von Schadgasen, z.B. Ammoniak, und Geruchsstoffen. Hinzu kommt die Bildung von Sickerwasser. Die daraus entstehenden Komplikationen werden dadurch umgangen, daß die Reststoffgemenge in geschlossenen Systemen behandelt werden, bis sie einen Zustand erreicht haben, der eine offene Nachbehandlung möglich macht.

Die Behandlung in geschlossenen Systemen kann statisch in ruhender Miete oder dynamisch durch Umwälzung vorgenommen werden. Bekannt sind Tunnel- und Containersysteme, die mit Reststoffen gefüllt werden. Die erforderliche Frischluft wird von unten oder seitlich durch die Haufen geblasen und die korrespondierende Abluft über Biofilter, z.B. Kompostfilter an die Umgebung abgegeben. Die Frischluft dient dazu, durch die Zufuhr von Sauerstoff den oxidativen (aeroben) Stoffumsatz zu forcieren und/oder die Temperatur in gewünschten Bereichen zu halten. Um die Durchmischung zu bedienen, werden auch rotierende Systeme mit Befeuchtungs- und Belüftungseinrichtungen eingesetzt.

Beide Systeme besitzen in der Regel Vorrichtungen zum Frischlufteintrag und Abluftaustrag mit oder ohne Konditionierung, d.h. Einstellung der Temperatur und Feuchte nach Sollwerten. Ein Umluftsystem, d.h. eine Luftrückführung ist nicht vorgesehen. Die Anlagen sind deshalb in Wahrheit keine geschlossenen Systeme. Sie verursachen u.U. ähnliche Umweltprobleme wie offene Anlagen. Die Frischlufteinspeisung dient der Kühlung oder der Aufrechterhaltung einer Regelstrecke über den kontinuierlichen Luftdurchsatz in Richtung auf Abluftaustrag. Die Verfahrenswahl wird meist nach wirtschaftlichen Überlegungen getroffen; biologische Kriterien bleiben unberücksichtigt.

Mit Ausnahme der Kompostierung von Rinde und der Bestandsabfälle aus dem Garten- und Landschaftsbau stoßen offene Aufbereitungsanlagen vor allem dann auf den Widerstand der Öffentlichkeit, wenn große Reststoffmengen mit intensiver Geruchsbildung umgesetzt werden.

Um dem Umweltschutz Rechnung zu tragen, wurden Verfahren entwickelt, deren mechanische Auslegung gewährleistet, daß der mikrobielle Stoffumsatz unter aeroben Bedingungen bei hohen Temperaturen verläuft. Bekannt ist die Methode, Frischluft in ein sogenanntes geschlossenes System einzublasen und die korrespondierende Abluft über ein Kompostfilter auszublasen. Durch eine kontinuierliche Messung des Kohlendioxidgehaltes der Abluft wird ermittelt, wann der mikrobielle Stoffumsatz seine höchsten Bildungsraten erreicht hat. Darauf wird der Luftdurchsatz eingeregelt. Ein Beispiel hierfür gibt die deutsche Patentschrift DE 38 00 201 C1 (GREEB). Die Wärmeentwicklung in Gegenwart eines Lufteintrages mit korrespondierendem Luftaustrag zu optimieren oder in bestimmten Bereichen zu beherrschen, wird auch durch Belüftungsvernetzungen (deutsche Offenlegungsschrift DE 34 01 889 A1 (WYSS)) und Umsetzungsprogramme (deutsche Offenlegungsschrift DE 36 42 626 A1 (VOELSKOW) und deutsche Patentschrift 37 43 904 C2 (ALEKSEEV)) in sogenannten geschlossenen und in offenen Systemen versucht. Dabei wird übersehen, daß der einfache Luftdurchsatz in derartigen Systemen auf die mikrobielle Stoffwechselleistung nachteilige Einflüsse ausübt. So führt der Frischlufteintrag in aufgeheizte Reaktionsräume häufig zu unerwünschten Austrocknungen oder im Winter zu Problemen bei der biogenen Wärmeentwicklung. Außerdem getattet das vorstenend geschilderte Regelungsprinzip, das sich auf den Luftdurchsatz als Regelstrecke stützt, keine Manipulation über die Einstellung stabiler Kohlendioxid: Sauerstoff-Verhältnisse. Eine derartige Einstellmöglichkeit ist aber notwendig, um den mikrobiellen Stoffumsatz in Richtung auf eine intensivierte oder verzögerte biogene Wärmeentwicklung regeln zu können. Die Möglichkeit, die biogene Wärementwicklung regeln zu können, ist wiederum notwendig, um bestimmte Temperaturbereiche für erwünschte Stoffwechselleistungen, z.B. Nitrifikation, Ligninabbau, Schadaromatenmineralisation, zu nutzen.

### Darstellung der Erfindung

Die Erfindung löst, zumindest entschärft die vorstehend angesprochenen Probleme mit den Gegenständen der Patentansprüche 1 und 12. Sowie den bevorzugten Ausführungsformen der abhängigen Ansprüche 2 - 11 und 13 - 24.

Grundlage der erfindungsgemäßen Lehre ist die gezielte Vernetzung physikalischer, chemischer und biologischer Mechanismen des terrestrischen Ökosystems in einer biotechnologisch konzipierten Aufbereitungsanlage unter dem Aspekt des Umweltschutzes. Diese Vernetzung stützt sich seitens der Regelungstechnik nicht auf die bisher übliche prozeßbeschreibende Meßwerterfassung, sondern benutzt die gewonnenen Daten dazu, Sollwertvorgaben anhand der Istwertentwicklung so zu variieren, daß bestimmte Zielzustände,d.h. die den jeweiligen Zielvorgaben entsprechenden mikrobiellen Stoffwechselleistungen rasch erreicht und behauptet, d.h. aufrechterhalten werden. Diese, vor allem computergestützte Prozeßführung wird in einem geschlossenen System realisiert, das durch eine Umluftführung charakterisiert ist. Die Umluftführung erlaubt dabei einen hohen Luftdurchsatz mit gewünschten Gaszusammensetzungen. Der in seiner Funktion als Meß- und Regelstrecke notwendige Luftdurchsatz verliert seine Doppelfunktion, die darin besteht, daß Sauerstoff über die Frischluft zwangsläufig zugeführt und Feuchtigkeit über die Abluft ausgetragen wird. Die Parameterentkopplung erlaubt jetzt, die gezielte Steuerung und Kontrolle des mikrobiellen Stoffumsatzes, der an sehr unterschiedliche Rahmenbedingungen geknüpft ist. Besonders unterstützt wird die Prozeßführung durch eine variable Umluftführung; ferner durch mechanische Einflußnahmen, die der Durchmischung der Reststoffgemenge dienen.

In festen biogenen Reststoffgemengen können die wasser- und luftgefüllten Hohlräume als Mikrokompartimente bezeichnet werden, deren Substratbeschaffenheit generell Mikroorgnaismen oder nur spezifischen Mikroorganismenarten Chancen der Entwicklung bietet. In statischen Systemen leisten die sich ansiedelnden Populationen wegen ihrer ortsfesten Positionierung einen durch die Art des Nährstoffangebotes begrenzten Stoffumsatz. Dieser kann je nach den Belüftungsverhältnissen von aeroben, fakultativ aeroben oder anaeroben Populationen bewerkstelligt werden. Durch die Änderung der Belüftungsintensität kann der Stoffumsatz über das Sauerstoffangebot beeinflußt werden. Ein zusätzliches Durchmischen schafft neue Mikrokompartimente und damit neue Milieubedingungen. Daraus folgt, daß nur stofflich einheitliche Reststoffe aufgrund der Substratidentität, z.B. zerkleinerte Baumrinde, in belüfteten Mieten eine voll befriedigende Rotte zeigen, heterogene Abfallgemenge aus Haushalten dagegen regelmäßig der häufigen Durchmischung in dynamisch arbeitenden Systemen bedürfen.

Die erfindungsgemäße Lehre ist die Übertragung der offenen Mietenrotte auf eine (dynamische) Behandlung der Reststoffgemenge in einem geschlossenen System. Dieses ist dadurch charakterisiert, daß die Umluft konditioniert in variablen Kreisläufen geführt wird und dadurch die Ansteuerung des mikrobiellen Stoffumsatzes in einer Feststoff-Fermentation, d.i. die Kompostierung, ähnlich subtil geschehen kann, wie dies bei Flüssigfermentationen, z.B. bei der Antibiotika-Herstellung, möglich ist. Die Frischlufteinspeisung dient nicht mehr der Kühlung oder der Aufrechterhaltung einer Regelstrecke über den kontinuierlichen Luftdurchsatz in Richtung auf Luftaustrag, sondern nur mehr der Konditionierung der Gasphase, z.B. des Sauerstoffgradienten. Dieses System produziert vergleichsweise wenig Abluft, was sich in der Verringerung der Filterkapazität niederschlägt und im Falle fehlender Biofilter als verminderte Umweltbelastung, z.B. Ammoniak, Geruchsstoffe, auswirkt.

Das erfindungsgemäße Verfahren und die erfindungsgemäße Vorrichtung führen zu einem physikalisch, chemisch und biologisch optimalen Verfahren, das insbesondere biologische Gesichtspunkte berücksichtigt.

Weitere bevorzugte Ausführungsformen der Erfindung und deren Vorteile ergeben sich aus den nachfolgend beschriebenen abhängigen Patentansprüchen.

Nach einer besonders bevorzugten Ausführungsform wird das ruhende Reststoffgemenge zeitvariabel und/oder abschnittsweise durchmischt (Anspruch 2) und hierzu bevorzugt eine Mischeinrichtung, insbesondere eine Trommelwalze eingesetzt, die zur zeitvariablen und/oder abschnittsweisen Durchmischung des ruhenden Reststoffgemenges ausgelegt ist (Anspruch 13).

Eine weitere bevorzugte Vorrichtung mit Mitteln zur Reststoffbelüftung weist wenigstens zwei Lüfter, insbesondere Radialventilatoren, auf, wobei jeder der beiden Lüfter eine andere Fläche des Reststoffgemenges anbläst. Die Radialventilatoren können dabei parallel oder in Reihe geschaltet sein (Anspruch 14).

Das Verfahren nach den Anspruch 2 sowie die Vorrichtung nach den Ansprüchen 13 und 14 stellen im Ergebnis eine Kombination konventioneller statischer Systeme (Kompost ruht in einem Tunnel und wird durchlüftet) mit konventionellen dynamischen Systemen (Kompost wird in einer sogenannten Danotrommel durchmischt) dar. Erst hierdurch läßt sich die Verfahrens- bzw. Prozeßführung auf jeweils gewünschte mikrobiologische Umsetzungen im Reststoffgemenge einstellen, nämlich dadurch, daß die für die gewünschte Umsetzung notwendigen Mikroorganismenarten jeweils das ihnen zusagende Milieu vorfinden. Durch Mischformen der Belüftungsarten läßt sich der Gradient des Sauerstoff-Kohlendioxidverhältnisses besonders bequem einstellen. Eine vollständige Durchlüftung des Reststoffgemenges führt regelmäßig zu hoher Sauerstoffzufuhr, was sich insbesondere bei der Geruchstilgung günstig auswirkt. Die Durchmischung des Reststoffgemenges schließlich führt zu einer physikalischen Verteilung der insgesamt im Reststoffgemenge befindlichen Nährstoffe und Mikroorganismen mit der Folge eines gleichmäßig günstigen mikrobiellen Stoffumsatzes im Reststoffgemenge.

Insgesamt lassen sich mit der Erfindung mikrobiell abbaubare und/oder angreifbare biogene oder abiogene organische Substanzen einem mikrobiellen Umsetzungsprozeß unterwerfen, wobei sowohl das Raumklima als auch speziell die klimatischen Verhältnisse im Reststoffgemenge, einschließlich des Sauerstoff-Kohlendioxidgradienten aeroben, anaeroben, mesophilen und/oder thermophilen Mikroorganismen anpaßbar sind.

Eine vorteilhafte Maßnahme besteht darin, daß mehrere Abschnitte mit gleichen oder verschiedenen Teilmengen des ruhenden Reststoffgemenges synchron oder asynchron mit gleicher oder unterschiedlicher Geschwindigkeit durchmischt werden (Anspruch 3). Diese Maßnahme kann vorteilhaft realisiert werden, indem mehrere Mischeinrichtungen zur abschnittweisen Durchmischung des Reststoffgemenges vorgesehen und mit einer Steuereinrichtung zum synchronen oder asynchronen, gleich- oder ungleichschnellen Durchfahren des Reststoffgemenges verbunden sind, insbesondere derart, daß die Mischeinrichtungen das Reststoffgemenge vorwärts und rückwärts durchfahren (Anspruch 15).

Bevorzugt werden die jeweils durchmischten Abschnitte durch das gesamte Reststoffgemenge hindurch bewegt, vorzugsweise nach Art einer Hin- und Herbewegung (Anspruch 4). Bevorzugt ist/sind die Mischeinrichtung(en) eine oder mehrere horizontal im Reststoffgemenge angeordnete Trommelwalze(n), die bevorzugt längs einer ebenfalls horizontalen Führungsschiene geführt werden (Anspruch 16).

Vorteihaft wird der jeweils durchmischte Reststoffgemenge-Abschnitt während der Durchmischung zerkleinert (Anspruch 5), bevorzugt durch an der Mischeinrichtung angebrachte Werkzeuge zum Zerkleinern und/oder Bewegen des Reststoffgemisches, vorzugsweise entgegen der Laufrichtung der Mischeinrichtung im Reststoffgemenge (Anspruch 17).

Eine weitere vorteilhafte Maßnahme besteht darin, daß das abschnittsweise zerkleinerte und/oder durchmischte Reststoffgemenge entgegen der Laufrichtung des Durchmischungsgerätes oder -abschnittes bewegt wird (Anspruch 6).

Bevorzugt wird das Reststoffgemenge während der Durchmischung egalisiert (Anspruch 7), vorteilhaft durch Zusatzeinrichtungen zur Egalisierung des Reststoffgemenges (Anspruch 20).

Bevorzugt wird/werden die erste und/oder die zweite Luftführung als zirkulierende Umluft im Sinne eines geschlossenen Systems geführt (Anspruch 8).

Nach einer vorteilhaften Maßnahme wird dem geschlossenen System über geeignete Einrichtungen zeitweise eine definierte Menge von Frischluft (Außenluft), reinem Sauerstoff oder reinem Kohlendioxid zugeführt und eine korrespondierende Abluftmenge, abgeführt, vorzugsweise über einen Biofilter (Ansprüche 9, 22 und 23).

Vorteilhaft wird das Reststoffgemenge selbst als Biofilter verwendet (Anspruch 10) und der und/oder die Luftströme werden geheizt oder gekühlt und/oder getrocknet oder befeuchtet (Anspruch 11).

Bevorzugt ist jeder Lüfter hinsichtlich seines Luftdurchsatzes steuerbar und mit einer eigenen Einrichtung zur Steuerung des Luftdurchsatzes verbunden. Besonders bevorzugt sind beide Luftdurchsatz-Steuereinrichtungen mit einem weiteren Steuerelement zur Steuerung des Verhältnisses der Luftdurchsätze der beiden Lüfter verbunden (Anspruch 19).

Nach einer weiteren vorteilhaften Ausgestaltung hat die erfindungsgemäße Vorrichtung eine Einrichtung zur Rückführung der von den Belüftungsmitteln ausgeblasenen Luft innerhalb des geschlossenen Systems (Anspruch 20); ferner Register, insbesondere Heiz- bzw. Kühlregister, einschließlich Wärmetauscher, sowie Feuchtigkeitsregister zur Regulierung des Raumklimas im geschlossenen System (Anspruch 21).

Bevorzugt hat die erfindungsgemäße Vorrichtung manuelle und/oder computergestützte Regelsysteme zur Steuerung der Mischeinrichtung, der Belüftungsmittel, der Register und/oder der Einrichtungen zur Zufuhr von Frischluft, reinem Sauerstoff oder Kohlendioxid und zur Abfuhr der Abluft (Anspruch 24).

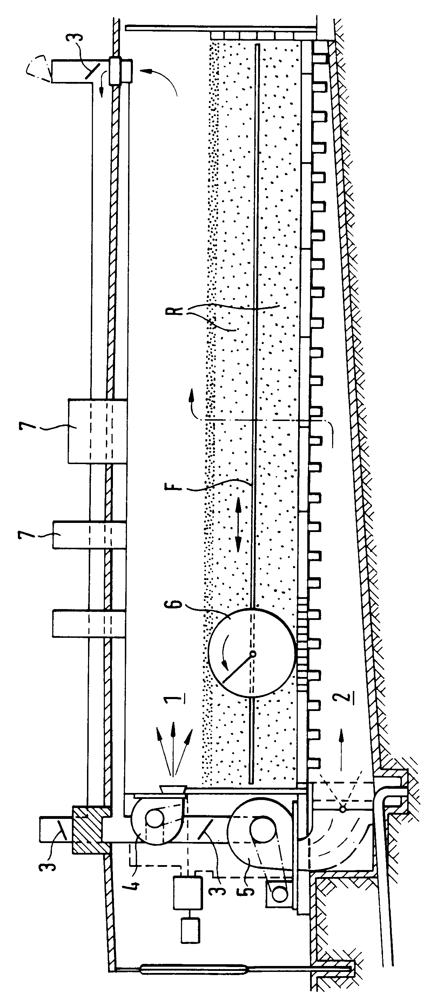

Im folgenden wird die Erfindung anhand eines Ausführungsbeispiels im Zusammenhang mit der Zeichnung ausführlicher erläutert.

### Kurze Beschreibung der Zeichnung

Die einzige Figur zeigt:
einen Schnitt durch ein nach der Erfindung aufgebautes System.

### Wege zur Ausführung der Erfindung

Grundeinheit des Systemes ist ein geschlossen umbauter Raum (s. Fig.). Der Raum besitzt bevorzugt dampfdiffusionsdichte Wände mit geringer Wärmeleitfähigkeit, um die Wärmeabstrahlung und die Einwirkung des Außenklimas gering zu halten. Damit ist der Bau völlig oder doch weitestgehend gasdicht. Die Bausubstanz und/oder Innenauskleidung bestehen vorteilhafter Weise aus Materialien, die extreme Temperaturschwankungen aushalten und ferner gegen Feuchtigkeit und aggressive Stoffe, z.B. Ammoniak, unempfindlich sind.

Der geschlossene Raum besitzt ein dergestalt unterteiltes Umluftsystem mit zwei Radialventilatoren 4 und 5, daß der Volumenstrom entweder vollständig durch die Reststoffmiete R geführt werden kann oder nur über der Miete zirkuliert. Im letzteren Falle wird in Abhängigkeit von der Strömungsgeschwindigkeit des über der Miete zirkulierenden Volumenstromes ein Luftdurchsatz durch die Miete konvektiv erwirkt. Durch unterschiedliche Klappenstellung 3 kann die Konvektion über einen Teilstrom der Umluft durch die Miete unterstützt werden. Wichtig ist, daß die beiden Radialventilatoren parallel angeordnet sind und der Umluftvolumenstrom in Verhältnissen zwischen 0 unf 100 % aufgeteilt werden kann. Der Einbau des parallel geschalteten Radialventilators in Position 4 kann auch in Position 3 (Absaugseite des Umluftkanals) erfolgen. Im Falle dieser Reihenschaltung wird die Wirkung des Radialventilators in Position 5 unterstützt. Der Sinn dieser Variabilität besteht in der dosierbaren, subtilen Einflußnahme auf den jeweils gewünschten mikrobiellen Stoffumsatz:
Im Gegensatz zur Flüssigfermentation lassen sich Feststoff-Fermentationen über die Gasphase nur schwer beeinflussen. Ein Durchströmen der Miete führt zur Identität von Raum- und Substratklima. Dies gilt auch für die Zusammensetzung der Gasphase im Hinblick auf das Verhältnis zwischen Sauerstoff und Kohlendioxid, das den mikrobiellen Stoffumsatz unmittelbar beeinflußt. Ein konvektiv betriebener Gasaustausch führt zur Gradientenbildung in der Miete mit massiver Rückwirkung auf den mikrobiellen Stoffumsatz. Die erfindungsgemäßen Kombinationen in der Umluftführung schaffen jene Spielräume, die nötig sind, um die beschriebenen Verfahrensziele zu erreichen. Nachstehend sei dies beispielhaft erläutert:

### Hygienisierung:

Häufiges Durchmischen mit Umluftführung durch die Miete R hindurch, wobei die dosierte Frischlufteinspeisung den Sauerstoffgehalt bei 21 % hält und die Temperatur 60° C nicht übersteigt.

### Geruchstilgung:

Häufiges Durchmischen mit Umluftführung durch die Miete R, wobei die dosierte Frischlufteinspeisung den natürlichen Sauerstoffgehalt aufrechterhält. Außerdem kann die Um- und Frischluft mit Sauerstoff angereichert werden, wenn die Persistenz der Geruchsstoffe dies erfordert oder abiogene organische Substanzen, z.B. Xenobiotica, in einen Abbau- oder Immobilisationsprozeß eingebunden werden sollen. Die Prozeßtemperatur wird unter 60° C gehalten.

### Rotte:

Der Abbau der Lignozellulose führt zur Dauerhumusbildung. Er findet nur bei Temperaturen unter 50° C statt. Außerdem kann der Sauerstoffgehalt der Umluft auf mehr als die Hälfte des natürlichen Gehaltes reduziert werden.

Die Umluft kann geheizt, gekühlt, getrocknet oder befeuchtet werden, um die klimatischen Rahmenbedingungen für den mikrobiellen Stoffumsatz einstellen zu können. Die dosierbare Zufuhr von Frischluft dient dazu, das Sauerstoff-Kohlendioxid-Verhältnis in der gewünschten Größenordnung zu halten. Die korrespondierende Abluft kann über einen Biofilter geruchsneutral in die Umwelt abgegeben werden: Biogene Überschußwärme läßt sich über die Wärmerückgewinnung aus dem Prozeß entfernen. Außerdem kann durch die gezielte Beeinflussung des Luftzustandes über das gewünschte Klima befeuchtet und getrocknet werden.

Das einwandfreie Durchströmen der Miete R setzt voraus, daß ein sorgfältig hergestelltes Reststoffgemenge möglichst gleiche Dichteverhältnisse in der Miete aufweist. Durch den Einsatz einer entsprechend gestalteten Trommel 6, die in wählbaren Zeitabständen den Haufen durchläuft, wird gewährleistet, daß die Miete R in der gesamten Breite und Höhe ohne Verdichtungen durchmischt wird. Mittels zugeordneter Trommeln 6 kann bei heterogenem Material die Durchmischung intensiviert werden; außerdem läßt sich durch Zusatzeinrichtungen, z.B. mittels Kammleisten, eine Zerkleinerung erreichen. Durchmischen und Zerkleinern bewirken die Zerstörung etablierter Kompartimente, was den mikrobiellen Stoffumsatz beschleunigt und optimiert. Das beschriebene Umsetzungsgerät sorgt auch für die Einhaltung der Mietenhöhe nach einer durch Setzungsvorgänge und Rotteverluste notwendigen Anpassung.

Um die gewünschten Zielzustände erreichen zu können, muß mittels einer computergestützten Meß- und Regeltechnik sichergestellt sein, daß die Hygienisierung bei Temperaturen um 60° C abläuft und ein rascher Abbau von Stinkstoffen erfolgt. Vorbedingung ist die mechanische Durchmischung der Miete. Dadurch werden anaerobe Zonen vermieden und die restriktiv wirkende Kompartimentbildung unterdrückt. Stinkstoffbeladene Luft wird als Umluft immer wieder durch die Miete geführt, so daß eine interne Bio-Filterwirkung erzielt wird. Die Dauerhumusbildung braucht nicht im geschlossenen System vollständig durchgeführt zu werden, da sie ohne Umweltbelastung auch in offenen, ruhenden Mieten abläuft. Bei Verwendung geschlossener Systeme muß dafür gesorgt werden, daß das Temperaturprofil des Prozesses unter 50° C verläuft. Durch variable Umluftgeschwindigkeiten und die beschriebene Aufspaltung des Umluft-Volumenstromes können optimale Zustände für die Rotteflora geschaffen werden.

Das beschriebene System kann modular aufgebaut werden, was den Vorteil hat, daß Behandlungseinheiten meß- und regeltechnisch gebündelt werden können. Die Software für den computergestützten Betrieb der Anlage ist auf die biotechnischen Erfordernisse der einzelnen Behandlungsschritte zugeschnitten.

### Konvektiver Betrieb 1:

Im konvektiven Betrieb ist nur der Radialventilator 4 in Betrieb. Die variable Luftströmung liegt über der ruhenden Miete, in der sich wegen des geringen Luftdurchsatzes ein Sauerstoff : Kohlenstoffdioxid-Gradient aufbaut, der Rückwirkungen auf die biogene Wärmeproduktion hat. Dieser Luftdurchsatz läßt sich durch Drosselung oder Erhöhung der Strömungsgeschwindigkeit des über der Miete entlangströmenden Volumenstromes vermindern oder verstärken, was zur Anreicherung von Kohlendioxid bzw. Sauerstoff führt. Durch die Variation der Strömungsgeschwindigkeit läßt sich der Wärmetransport so regulieren, daß gleiche Temperaturen in der Miete und der Umluft herrschen.

Diese Regelung hat gegenüber konventionellen Systemen, die mit Temperaturdifferenzen zwischen Miete und Umluft fahren, folgende Vorteile: i) der mikrobielle Stoffumsatz kann sauerstofflimitiert gehalten werden; ii) der Kompost trocknet nicht aus. Diese Prozeßführung bietet sich für die Substratvorbereitung im Speisepilzanbau an.

### Belüftungsbetrieb 2:

Beim Belüftungsbetrieb läuft nur der Radialventilator 5 und drückt die Luft durch die Miete R. Ein hoher Luftdurchsatz bewirkt eine Identität zwischen Raum- und Kompostklima. Die Temperaturkonstanz der Umluft, konditioniert durch die Register 7, teilt sich dem Kompost mit.

Der Vorteil dieser Regelung ist die optimale Sauerstoffversorgung des Kompostes, was einen ungebremsten mikrobiellen Stoffumsatz bewirkt. Diese Prozeßführung bietet sich für die Hygienisierung und Geruchstilgung an.

### Kombinationsbetrieb:

Beim Kombinationsbetrieb laufen beide Radialventilatoren 4 und 5, wobei sich ihre Förderleistung zu 100 % eines Richtwertes addieren, der für verschiedene Leistungsstufen charakteristisch ist. Dadurch werden Sogbeeinflussungen vermieden.

Diese Regelung hat folgende Vorteile: der bereits unter "konvektiver Betrieb 1" beschriebene Gradientenaufbau läßt sich gezielt manipulieren. Hierdurch läßt sich der mikrobielle Stoffumsatz fein abstimmen, was beim Verfahrensziel "Dauerhumusbildung" von großer Bedeutung ist.

### Trommelbetrieb 6:

Die Durchmischung der Miete bewirkt die Optimierung des mikrobiellen Stoffwechsels durch Neuverteilung der mikrobiellen Populationen und Substrate auf neu sich bildende Kompartimente. Die Durchmischung kann in Gegenwart der beschriebenen Luftführungen und -konditionierungen laufen.

### Register 7:

Die Register 7 dienen der Konditionierung der Umluft. Durch die beschriebenen Luftführungssysteme läßt sich eine Identität zwischen Lufttemperatur und Komposttemperatur herstellen, was zur Folge hat, daß beim Entfernen der biogenen Überschußwärme durch Kühlregister oder Wärmetausch die Feuchtigkeitsverhältnisse konstant bleiben. Ein Sonderfall wäre die Abkühlung der Umluft zu Prozeßende, wenn die trockene Kaltluft nicht nur Wärme, sondern auch Feuchtigkeit abführen soll, damit eine Komposttrocknung erreicht wird.

### Ventile 3:

Die Ventile werden für die Luftführung benötigt. Sie können als Stellglieder angesteuert werden und ermöglichen die Einspeisung von Frischluft, den Austrag der Abluft oder die Sperrung und Öffnung der Umluftwege bei den verschiedenen beschriebenen Betriebszuständen.

## Patentansprüche

1. Verfahren zur biotechnologischen Behandlung eines Reststoffgemenges, vorzugsweise in Form einer Miete, durch einen mikrobiellen Umsetzungsprozeß in einem geschlossenen System, insbesondere zur Herstellung von Kompost, unter Einbeziehung physikalischer und chemischer Verfahrensparameter, wobei das Reststoffgemenge wenigstens einer ersten Belüftungsart unterworfen wird, bei welcher die Luft durch das Reststoffgemenge hindurchgeführt wird, wobei
die physikalischen und chemischen sowie biologische Verfahrensparameter vernetzt und im Sinne einer Optimierung der Hygienisierung, Geruchstilgung und Dauerhumusbildung des Reststoffgemenges auf den jeweils dazu erforderlichen mikrobiellen Stoffumsatz zugeschnitten werden, dadurch, daß das Restoffgemenge wenigstens einer zur ersten Belüftungsart unterschiedlichen zweiten Belüftungsart oder einer Mischform zwischen diesen beiden Belüftungsarten unterworfen wird, wobei bei der zweiten Belüftungsart die Luft oberhalb des Reststoffgemenges entlanggeführt wird und dabei die beiden Belüftungsarten zum Aufbau gewünschter Temperatur-, Feuchtigkeits- und/oder Sauerstoff-Kohlendioxid-Verhältnisse, insbesondere Profile, im Reststoffgemenge so aneinander angepaßt werden, daß variable Mischungsverhältnisse (0-100 %) aus dem Umluftvolumenstrom gebildet werden können.

2. Verfahren nach Anspruch 1, dadurch gekennzeichnet, daß das ruhende Reststoffgemenge zeitvariabel und/oder abschnittsweise durchmischt wird.

3. Verfahren nach Anspruch 2, dadurch gekennzeichnet, daß mehrere Abschnitte mit gleichen oder verschiedenen Teilmengen des ruhenden Reststoffgemenges synchron oder asynchron mit gleicher oder unterschiedlicher Geschwindigkeit durchmischt werden.

4. Verfahren nach einem der Ansprüche 2 bis 3, dadurch gekennzeichnet, daß die jeweils durchmischten Abschnitte durch das gesamte Reststoffgemenge hindurch bewegt werden, vorzugsweise nach Art einer Hin- und Herbewegung.

5. Verfahren nach einem der Ansprüche 2 bis 4, dadurch gekennzeichnet, daß der jeweils durchmischte Reststoffgemenge-Abschnitt während der Durchmischung zerkleinert wird.

6. Verfahren nach einem der Ansprüche 2 bis 5, dadurch gekennzeichnet, daß das abschnittsweise zerkleinerte und/oder durchmischte Reststoffgemenge entgegen der Laufrichtung des Durchmischungsgerätes oder- abschnittes bewegt wird.

7. Verfahren nach einem der Ansprüche 2 bis 6, dadurch gekennzeichnet, daß das Reststoffgemenge während der Durchmischung egalisiert wird.

8. Verfahren nach einem der Ansprüche 1 - 7, dadurch gekennzeichnet, daß die erste und/oder die zweite Luftführung als zirkulierende Umluft im Sinne eines geschlossenen Systems geführt wird/werden.

9. Verfahren nach einem der Ansprüche 1 bis 8, dadurch gekennzeichnet, daß dem geschlossenen System zeitweise eine definierte Menge von Frischluft (Außenluft), reinem Sauerstoff oder reinem Kohlendioxid zugeführt wird und eine korrespondierende Abluftmenge, abgeführt wird, vorzugsweise über einen Biofilter.

10. Verfahren nach einem der Ansprüche 1 bis 9, dadurch gekennzeichnet, daß das Reststoffgemenge selbst als Biofilter verwendet wird.

11. Verfahren nach einem der Ansprüche 1 - 10, dadurch gekennzeichnet, daß der und/oder die Luftströme geheizt oder gekühlt und/oder getrocknet oder befeuchtet werden.

12. Vorrichtung, insbesondere zur Durchführung des Verfahrens nach einem der Ansprüche 1 bis 11, zur biotechnologischen Behandlung eines Reststoffgemenges (R), insbesondere in Form einer Miete, durch einen mikrobiellen Umsetzungsprozeß in einem geschlossenen System, unter Berücksichtigung physikalischer und chemischer Verfahrensparameter, mit Mitteln zur Belüftung des Reststoffgemenges (R), die wenigstens einen Lüfter aufweisen, der die Luft durch das Reststoffgemenge hindurch führt, wobei
Einrichtungen zur Vernetzung der physikalischen und chemischen sowie biologischer Verfahrensparameter im Sinne einer Optimierung der Hygienisierung, Geruchstilgung und Dauerhumusbildung des Reststoffgemenges (R) unter Einstellung des jeweils erwünschten mikrobiellen Umsetzungsprozesses vorgesehen sind, wobei die Belüftungsmittel des Reststoffgemenges (R) wenigstens einen weiteren Lüfter aufweisen, der die Luft oberhalb des Reststoffgemenges entlang führt.

13. Vorichtung nach Anspruch 12, gekennzeichnet durch wenigstens eine Mischeinrichtung (6), insbesondere eine Trommelwalze, die zur zeitvariablen und/oder abschnittsweisen Durchmischung des ruhenden Reststoffgemenges (R) ausgelegt ist.

14. Vorrichtung nach Anspruch 12 oder 13, mit Mitteln zur Belüftung des Reststoffgemenges (R), dadurch gekennzeichnet, daß die Belüftungsmittel des Reststoffgemenges (R) wenigstens zwei Lüfter, insbesondere Radialventilatoren (4, 5) aufweisen, wobei jeder der beiden Lüfter eine andere Fläche des Reststoffgemenges (R) anbläst, wobei die Anordnung der Radialventilatoren parallel oder in Reihe geschaltet sein kann.

15. Vorrichtung nach Anspruch 13 oder 14, dadurch gekennzeichnet, daß mehrere Mischeinrichtungen (6) zur abschnittweisen Durchmischung des Reststoffgemenges (R) vorgesehen und mit einer Steuereinrichtung zum synchronen oder asynchronen, gleich- oder ungleichschnellen Durchfahren des Reststoffgemenges verbunden sind, insbesondere derart, daß die Mischeinrichtungen (6) das Reststoffgemenge vorwärts und rückwärts durchfahren.

16. Vorrichtung nach einem der Ansprüche 13 bis 15, dadurch gekennzeichnet, daß die Mischeinrichtung (en) (6) eine oder mehrere horizontal im Reststoffgemenge angeordnete Trommelwalze(n) ist/sind, die bevorzugt längs einer ebenfalls horizontalen Führungsschiene (F) geführt werden.

17. Vorrichtung nach einem der Ansprüche 13 bis 16, gekennzeichnet durch an der Mischeinrichtung (6) angebrachte Werkzeuge zum Zerkleinern und/oder Bewegen des Reststoffgemisches, vorzugsweise entgegen der Laufrichtung der Mischeinrichtung (6)im Reststoffgemenge (R).

18. Vorrichtung nach einem der Ansprüche 13 bis 17, gekennzeichnet durch Zusatzeinrichtungen zur Egalisierung des Reststoffgemenges.

19. Vorrichtung nach einem der Ansprüche 14 bis 18, dadurch gekennzeichnet, daß jeder Lüfter (4, 5) hinsichtlich seines Luftdurchsatzes steuerbar und mit einer eigenen Einrichtung zur Steuerung des Luftdurchsatzes verbunden ist und beide Luftdurchsatz-Steuereinrichtungen mit einem weiteren Steuerelement zur Steuerung des Verhältnisses der Luftdurchsätze der beiden Lüfter (4, 5) verbunden sind.

20. Vorrichtung nach einem der Ansprüche 14 bis 19, gekennzeichnet durch eine Einrichtung (3, Umluftkanal) zur Rückführung der von den Belüftungsmitteln (4, 5) ausgeblasenen Luft innerhalb des geschlossenen Systems.

21. Vorrichtung nach einem der Ansprüche 14 bis 20, gekennzeichnet durch Register (7), insbesondere Heiz- bzw. Kühlregister, einschließlich Wärmetauscher, sowie Feuchtigkeitsregister zur Regulierung des Raumklimas im geschlossenen System.

22. Vorrichtung nach einem der Ansprüche 14 bis 21, gekennzeichnet durch eine Frischluftzufuhr, eine Abluftabfuhr und einen Biofilter.

23. Vorrichtung nach einem der Ansprüche 14 bis 22, dadurch gekennzeichnet, daß Einrichtungen zur Zufuhr reinen Sauerstoffes bzw. reinen Kohlendioxides vorhanden sind.

24. Vorrichtung nach einem der Ansprüche 14 bis 23, gekennzeichnet durch manuelle und/oder computergestützte Regelsysteme zur Steuerung der Mischeinrichtung (6), der Belüftungsmittel (4, 5), der Register (7) und/oder der Einrichtungen zur Zufuhr von Frischluft, reinem Sauerstoff oder Kohlendioxid und zur Abfuhr der Abluft.

## Claims

1. A process for the biotechnological treatment of a mixture of residual substances, preferably in the form of a silo, by a microbial reaction process in a closed system, in particular for the production of compost, with the inclusion of physical and chemical process parameters, whereby the mixture of residual substances is subject to at least a first type of aeration, in which the air is passed through the mixture of residual substances, whereby the physical and chemical and also biological process parameters are interconnected and in the context of an optimization of sanitization, odour eradication and continuous humus formation of the mixture of residual substances are tailored to the required conversion which is required in that the mixture of residual substances undergoes at least one second type of aeration different from the first type of aeration or a mixture of these two types of aeration, whereby with the second type of aeration the air is guided along above the mixture of residual substances and in this case the two types of aeration for building up desired temperature, moisture and/or oxygen-carbon dioxide ratios, in particular profiles, in the mixture of residual substances are adapted to one another so that variable mixing ratios (0 - 100 %) can be formed from the circulating air volume flow.

2. A process according to Claim 1,
**characterised in that** the static mixture of residual substances is thoroughly mixed in a time-variable manner and/or in sections.

3. A process according to Claim 2,
**characterised in that** several sections having the same or different partial quantities of the static waste material are thoroughly mixed synchronously or asynchronously at the same or at a different speed.

4. A process according to one of Claims 2 to 3,
**characterised in that** the thoroughly mixed sections are moved through the entire mixture of residual substances, preferably in the manner of a to and fro movement.

5. A process according to one of Claims 2 to 4,
**characterised in that** the thoroughly mixed mixture of residual substances is reduced in size during thorough mixing.

6. A process according to one of Claims 2 to 5,
**characterised in that** the mixture of residual substances reduced and/or thoroughly mixed in sections is moved against the direction of feed of the thorough mixing device or section.

7. A process according to one of Claims 2 to 6,
**characterised in that** the mixture of residual substances is equalised during thorough mixing operation.

8. A process according to one of Claims 1 to 7,
**characterised in that** the first and/or the second air supply/supplies is/are supplied as circulating air in the manner of a closed system.

9. A process according to one of Claims 1 to 8,
**characterised in that** at times a defined quantity of fresh air (external air), pure oxygen or pure carbon dioxide is supplied to the closed system and a corresponding quantity of exhaust air is removed, preferably via a biofilter.

10. A process according to one of Claims 1 to 9,
**characterised in that** the mixture of residual substances is itself used as a biofilter.

11. A process according to one of Claims 1 to 10,
**characterised in that** the air stream and/or the air streams is/are heated or cooled and/or dried or moistened.

12. A device, in particular for performing the process according to one of Claims 1 to 11, for the biotechnological treatment of a mixture of residual substances (R), in particular in the form of a silo, by a microbial reaction process in a closed system, taking into consideration physical and chemical process parameters, having means to aerate the mixture of residual substances (R), which comprise at least one fan, which conveys the air through the mixture of residual substances, whereby devices are provided for the interconnection of the physical and chemical and also the biological process parameters in the context of an optimisation of the sanitization, odour eradication and continuous humus formation of the mixture of residual substances (R) with the adjustment of the desired microbial reaction process, whereby the aeration means for the mixture of residual substances (R) comprise at least one further fan, which conveys the air above the mixture of residual substances.

13. A device according to Claim 12,
**characterised by** at least one mixing device (6) in particular a drum roller, which is designed for the thorough mixing of the static mixture of residual substances (R) in a time-variable manner and/or in sections.

14. A device according to Claim 12 or 13, having means to aerate the mixture of residual substances (R),
**characterised in that** the aeration means for the mixture of residual substances (R) comprise at least two fans, in particular radial ventilators (4, 5), whereby each of the two fans blows on a different surface of the mixture of residual substances (R), whereby the arrangement of the radial ventilators can be connected parallel or in series.

15. A device according to Claim 13 or 14,
**characterised in that** several mixing devices (6) are provided for the thorough mixing in sections of the mixture of residual substances (R) and are connected to a control mechanism for the synchronous or asynchronous feed at the same or different speed of the mixture of residual substances, in particular so that the mixing devices (6) of the mixture of residual substances travel forwards and backwards.

16. A device according to one of Claims 13 to 15,
**characterised in that** the mixing device(s) is/are one or more drum rollers disposed horizontally in the mixture of residual substances, which are preferably guided along a guide rail (F), which is also horizontal.

17. A device according to one of Claims 13 to 16,
**characterised by** tools mounted on the mixing device (6) for crushing and/or moving the mixture of residual substances, preferably against the feed direction of the mixing device (6) in the mixture of residual substances (R).

18. A device according to one of Claims 13 to 17,
**characterised by** additional devices for equalising the mixture of residual substances.

19. A device according to one of Claims 14 to 18,
**characterised in that** the air throughput of each fan (4, 5) can be controlled and each fan is connected to its own device for controlling the air throughput and both air throughput control devices are connected to a further control element for controlling the ratio of the air throughputs of the two fans (4, 5).

20. A device according to one of Claims 14 to 19,
**characterised by** a device (3, circulating air duct) for returning the air blown out by the aeration means (4, 5) inside the closed system.

21. A device according to one of Claims 14 to 20,
**characterised by** registers (7), in particular heating and cooling registers, including heat exchangers, and also humidity registers for regulating the atmospheric environment in the closed system.

22. A device according to one of Claims 14 to 21,
**characterised by** a fresh air supply, an exhaust air outlet and a biofilter.

23. A device according to one of Claims 14 to 22,
**characterised in that** devices for the supply of pure oxygen and pure carbon dioxide are provided.

24. A device according to one of Claims 14 to 23,
**characterised by** manual and/or computer-controlled regulating systems for controlling the mixing device (6), the aeration means (4, 5), the registers (7) and/or the devices for supplying fresh air, pure oxygen or carbon dioxide and for the removal of exhaust air.

## Revendications

1. Procédé pour le traitement biotechnologique d'un mélange de substances résiduelles, de préférence sous forme d'une meule, par un procédé de conversion microbienne dans un système fermé, en particulier pour fabriquer un compost, par utilisation de paramètres de procédé physiques et chimiques, le mélange de substances résiduelles étant soumis au moins à un premier type d'aération, dans lequel on fait passer de l'air à travers le mélange de substances résiduelles ; où les paramètres de procédé physiques et chimiques, ainsi que biologiques, sont liés les uns aux autres et, pour optimiser le caractère hygiénique du mélange de substances résiduelles, pour supprimer son odeur et lui permettre de former un humus permanent, on les adapte aux réactions de conversion microbienne qui y sont nécessaires ; le mélange de substances résiduelles étant soumis à au moins un deuxième type d'aération, différent du premier type d'aération, ou encore à une forme mixte intermédiaire entre ces deux types d'aération ; l'air, dans le deuxième type d'aération, passant le long et au-dessus du mélange de substances résiduelles, les deux types d'aération, pour permettre d'obtenir les proportions souhaitées entre la température, l'humidité et/ou l'oxygène/l'anhydride carbonique, en particulier les profils correspondants, étant adaptés les uns aux autres, dans le mélange de substances résiduelles, de façon que l'on puisse obtenir des rapports de mélange variables entre 0 et 100 % à partir du débit volumique de l'air de circulation.

2. Procédé selon la revendication 1, caractérisé en ce que le mélange de substances résiduelles, au repos, est mélangé d'une manière variable en fonction du temps, et/ou par portions.

3. Procédé selon la revendication 2, caractérisé en ce qu'on mélange d'une manière synchrone ou asynchrone, à des vitesses identiques ou différentes, plusieurs portions comportant des quantités partielles identiques ou différentes, du mélange de substances résiduelles au repos.

4. Procédé selon l'une des revendications 2 ou 3, caractérisé en ce qu'on déplace les portions mélangées, en les faisant passer à travers la totalité du mélange de substances résiduelles, de préférence sous forme d'un mouvement de va-et-vient.

5. Procédé selon l'une des revendications 1 à 4, caractérisé en ce que la portion mélangée du mélange de substances résiduelles subit un broyage pendant ce mélange.

6. Procédé selon l'une des revendications 2 à 5, caractérisé en ce que le mélange de substances résiduelles ainsi broyées et/ou mélangées par portions, se déplace dans le sens de déplacement du mélangeur ou de la portion mélangée.

7. Procédé selon l'une des revendications 2 à 6, caractérisé en ce que le mélange de substances résiduelles est égalisé pendant le mélange.

8. Procédé selon l'une des revendications 1 à 7, caractérisé en ce que l'air du premier et/ou du deuxième type d'aération passe sous forme d'une circulation d'air, au sens d'un système fermé.

9. Procédé selon l'une des revendications 1 à 8, caractérisé en ce qu'on envoie dans le système fermé, d'une manière dépendant du temps, une quantité parfaitement définie d'air frais (air extérieur), d'oxygène pur et/ou d'anhydride carbonique pur, et qu'on évacue une quantité correspondante d'effluents gazeux, de préférence par l'intermédiaire d'un biofiltre.

10. Procédé selon l'une des revendications 1 à 9, caractérisé en ce que le mélange de substances résiduelles est lui-même utilisé comme biofiltre.

11. Procédé selon l'une des revendications 1 à 10, caractérisé en ce que le et/ou les courants d'air sont chauffés ou refroidis et/ou séchés ou humidifiés.

12. Procédé, en particulier pour mettre en oeuvre le procédé selon l'une des revendications 1 à 11, pour le traitement biotechnologique d'un mélange de substances résiduelles (R), en particulier sous forme d'une meule, par un procédé de conversion microbienne dans un système fermé, en tenant compte des paramètres de procédé physiques et chimiques, avec des moyens pour aérer le mélange de substances résiduelles (R), qui comportent au moins un aérateur, qui envoie de l'air à travers le mélange de substances résiduelles, où on prévoit des dispositifs pour relier les uns aux autres les paramètres de procédé physiques et chimiques, ainsi que biologiques, dans le but d'optimiser le caractère hygiénique du mélange de substances résiduelles (R), d'en supprimer les odeurs et de lui permettre de former un humus permanent, par ajustement du procédé de conversion microbienne souhaitée dans chaque cas particulier, les moyens d'aération du mélange de substances résiduelles (R) comportant au moins un aérateur supplémentaire, qui envoie l'air le long et au-dessus du mélange de substances résiduelles.

13. Dispositif selon la revendication 12, caractérisé par au moins un dispositif mélangeur (6), en particulier un cylindre à tambour, qui est conçu pour permettre le mélange, variable en fonction du temps et/ou par portions, du mélange de substances résiduelles (R) au repos.

14. Dispositif selon les revendications 12 ou 13, avec des moyens pour aérer le mélange de substances résiduelles (R), caractérisé en ce que les moyens d'aération du mélange de substances résiduelles (R) comportent au moins deux aérateurs, en particulier des ventilateurs radicaux (4, 5), chacun des deux aérateurs envoyant de l'air sur une surface différente du mélange de substances résiduelles (R), les ventilateurs radiaux pouvant être montés en parallèle ou en série.

15. Dispositif selon la revendication 13 ou 14, caractérisé en ce qu'on prévoit plusieurs dispositifs mélangeurs (6), pour assurer le mélange par portions du mélange de substances résiduelles (R), ces dispositifs mélangeurs étant reliés à un dispositif de commande assurant la traversée synchrone ou asynchrone, à la même vitesse ou à une vitesse différente, du mélange de substances résiduelles, en particulier de façon que les dispositifs mélangeurs (6) traversent le mélange de substances résiduelles vers l'avant et vers l'arrière.

16. Dispositif selon l'une des revendications 13 à 15, caractérisé en ce que le ou les dispositifs mélangeurs (6) représentent un ou plusieurs cylindres à tambours, disposés horizontalement dans le mélange de substances résiduelles, ces cylindres étant de préférence guidés le long d'un rail de guidage lui aussi horizontal (F).

17. Dispositif selon l'une des revendications 13 à 16, caractérisé par des outils, rapportés au dispositif mélangeur (6), destinés à broyer et/ou déplacer le mélange de substances résiduelles, de préférence dans le sens inverse du déplacement du dispositif mélangeur (6) dans le mélange de substances résiduelles (R).

18. Dispositif selon l'une des revendications 13 à 17, caractérisé par des dispositifs supplémentaires destinés à égaliser le mélange de substances résiduelles.

19. Dispositif selon l'une des revendications 14 à 18, caractérisé en ce que chaque aérateur (4, 5) peut être piloté pour ce qui est de son débit d'air, et est relié à un dispositif qui lui est propre, destiné à réguler le débit de l'air, et que les deux dispositifs de régulation du débit de l'air sont reliés à un autre élément de commande, destiné à réguler le rapport entre le débit d'air des deux aérateurs (4, 5).

20. Dispositif selon l'une des revendications 14 à 19, caractérisé par un dispositif (3, gaine de circulation) destiné à renvoyer, à l'intérieur du système fermé, l'air qui a été soufflé vers l'extérieur par les moyens d'aération (4, 5).

21. Dispositif selon l'une des revendications 14 à 20, caractérisé par des registres (7), en particulier des registres de chauffage ou de refroidissement, comprenant des échangeurs de chaleur, ainsi que des registres d'humidité, destinés à réguler les conditions ambiantes dans le système fermé.

22. Dispositif selon l'une des revendications 14 à 21, caractérisé par un dispositif d'amenée d'air frais, un dispositif d'évacuation des effluents gazeux et un biofiltre.

23. Dispositif selon l'une des revendications 14 à 22, caractérisé en ce qu'il comporte des dispositifs destinés à amener de l'oxygène pur ou de l'anhydride carbonique pur.

24. Dispositif selon l'une des revendications 14 à 23, caractérisé par des systèmes de régulation manuels et/ou informatisés, destinés à piloter le dispositif mélangeur (6), les moyens d'aération (4, 5), les registres (7) et/ou les dispositifs destinés à amener l'air frais, l'oxygène pur ou l'anhydride carbonique, et à évacuer les effluents gazeux.
